# EUROPÄISCHE PATENTSCHRIFT

(11) **EP 1 985 334 B1**
(45) Veröffentlichungstag und Bekanntmachung des Hinweises auf die Patenterteilung: **01.06.2011**
(21) Anmeldenummer: 08154645.9
(22) Anmeldetag: 07.02.2003
(51) Int. Cl.: A62C 3/16, A62C 5/00, A62C 37/36

(54) **Brandschutz für eine Windenergieanlage**
Fire protection for wind energy plant
Protection au feu pour centrale éolienne

(30) Priorität: 09.02.2002 DE 10205373
(43) Veröffentlichungstag der Anmeldung: 29.10.2008
(62) Teilanmeldung aus: 03706453.2
(73) Patentinhaber: Wobben, Aloys, 26607 Aurich (DE)
(72) Erfinder: Wobben, Aloys, 26607 Aurich (DE)
(74) Vertreter: Göken, Klaus G.

(56) Entgegenhaltungen:
- EP-A- 1 122 425
- EP-A- 1 147 789
- EP-A- 1 168 479
- WO-A-00/52293
- DE-C1- 4 204 382
- FR-A1- 2 511 128
- JP-A- 62 000 367
- US-A- 4 091 874
- US-A- 5 507 539

## Beschreibung

Die vorliegende Erfindung betrifft eine Windenergieanlage mit einem Turm und einer an der Spitze des Turmes angeordneten Gondel. Der Begriff Windenergieanlage im Sinne der Erfindung schließt dabei Nebengebäude, in denen z. B. ein Transformator o. ä. untergebracht ist, mit ein.

Bei Horizontalachsen-Windenergieanlagen befindet sich in der Gondel der Generator, der die elektrische Energie erzeugt. Diese elektrische Energie wird dann über geeignete Leiter von der Gondel an der Spitze des Turmes zum Fuß des Turmes oder einem Nebengebäude geleitet und von dort in das Energieversorgungsnetz eingespeist. Dazu sind weitere Komponenten wie z. B. Stromrichter, Schaltanlagen, Transformatoren, etc. vorgesehen, die je nach Konzept der Windenergieanlage in der Gondel und/oder im Turm der Windenergieanlage und/oder in dem Nebengebäude angeordnet sind.

Abhängig von der Leistungsfähigkeit der Anlage ist eine Leistung von durchaus mehreren MW zu übertragen. Dabei wird wiederum abhängig vom Konzept der Windenergieanlage wenigstens ein Teil der Leistung - und häufig die gesamte Leistung - über Stromrichter geführt, wo in der Regel Halbleiter als Schaltelemente verwendet werden, die beträchtliche Ströme schalten müssen.

Gerade bei hohen Leistungen entstehen natürlich auch unvermeidbar hohe Temperaturen, z. B. in den Halbleitern, aber auch in anderen Komponenten einer Windenergieanlage, z. B. Lager. Diese hohen Temperaturen können aufgrund verschiedener Ursachen zu der Entstehung eines Brandes in einer solchen Windenergieanlage führen. Eine Brandgefahr besteht auch, wenn sich z. B. in Folge eines technischen Fehlers ein Lichtbogen ausbildet, der wiederum brennbares Material in seiner Nähe entzündet. Ein solcher Brand kann dann leicht zu einer Beschädigung oder Zerstörung wichtiger Teile der Windenergieanlage führen, so dass ein Weiterbetrieb der Anlage ausgeschlossen ist. Dabei entsteht neben den durch das Feuer entstandenen Schäden dann auch noch ein Ertragsausfall bis zur Instandsetzung und Wiederinbetriebnahme der Windenergieanlage.

Seit 1999 werden bereits gemäß den gesetzlichen Vorschriften Windenergieanlagen mit Feuerlöschgeräten in der Gondel oder im Turm ausgerüstet. Diese Geräte sind manuell bedienbar, was ihren Einsatz im tatsächlichen Brandfall erschwert, nämlich dann, wenn der Aufenthalt in der gesamten Windenergieanlage lebensgefährlich sein sollte.

Aus der DE 100 05 190 ist eine Windenergieanlage mit einer Feuerlöscheinrichtung zum Abgeben eines Löschmittels in der Gondel, dort als Aufnahmeraum bezeichnet, bekannt, durch welches ein ausgebrochenes Feuer gelöscht werden soll. Dazu sind entsprechende Vorrichtungen in der Gondel der Windenergieanlage vorgesehen. Nachteilig bei einer solchen Windenergieanlage ist jedoch, dass bereits zum Löschen eines Brandes in der Gondel dieser bekannten Windenergieanlage beträchtliche Mengen an Löschmittel erforderlich sind. Erheblich mehr Löschmittel ist erforderlich, um einen Brand im Turm der Windenergieanlage zu löschen. Weiterhin ist es bei dieser bekannten Windenergieanlage nachteilig, dass mit dem Ausbrechen eines Brandes bereits Schäden entstehen.

Aufgabe der vorliegenden Erfindung ist es daher, eine Windenergieanlage anzugeben, welche das Entstehen eines Brandes verhindert oder wenigstens dem Schaden begrenzt.

Diese Aufgabe wird gelöst durch den Gegenstand des Anspruchs 1. Dabei liegt der Erfindung die Erkenntnis zugrunde, dass eine Entstehung eines Brandes in einer inerten Atmosphäre weitestgehend ausgeschlossen ist und daher auf aufwendige Löschvorrichtungen verzichtet werden kann.

In einer bevorzugten Ausführungsform der Erfindung ist jeweils wenigstens eine Vorrichtung zum Erzeugen einer inerten Atmosphäre im Turm und in der Gondel der Windenergieanlage vorgesehen. Durch die größere Anzahl von Vorrichtungen zum Erzeugen einer inerten Atmosphäre kann eine inerte Atmosphäre in der Windenergieanlage entsprechend schneller hergestellt werden und somit die Brandgefahr entsprechend schneller beseitigt werden.

Besonders bevorzugt ist eine Vorrichtung zum Erzeugen einer inerten Atmosphäre als Brennstoffzelle ausgebildet. Weiterhin ist wenigstens eine Vorrichtung zum Erzeugen von Wasserstoff und eine Zuführung des Wasserstoffs zu der Brennstoffzelle vorgesehen. Da in Brennstoffzellen eine Reaktion abläuft, in der aus Wasserstoff und Sauerstoff Wasser gebildet wird, kann somit der in der Luft im Anlageninneren enthaltene Sauerstoff verbraucht werden. Da die Atmosphäre einen Stickstoffanteil von ca. 78 %, einen Sauerstoffanteil von ca. 21 % und noch vernachlässigbare Anteile anderer Gase beinhaltet, führt der Verbrauch des Sauerstoffs in der Windenergieanlage im Wesentlichen zu einer StickstoffAtmosphäre, die im hohen Maße inert ist. Demnach können für die weiteren Betrachtungen der Verbrauch von Sauerstoff und die Erzeugung von Stickstoff gleichgesetzt werden. Sobald der Sauerstoff in der Windenergieanlage verbraucht ist, können die Brennstoffzellen nicht mehr arbeiten und geben deshalb auch keine elektrische Energie mehr ab. Dies kann wiederum als Indikator dafür verwendet werden, dass eine inerte Atmosphäre innerhalb der Windenergieanlage hergestellt ist.

In einer besonders bevorzugten Weiterbildung der Erfindung wird die von der Brennstoffzelle erzeugte elektrische Energie der Vorrichtung zum Erzeugen von Wasserstoff zugeführt. Dadurch wird der Anteil der von der Windenergieanlage erzeugten elektrischen Energie, der zur Erzeugung von Wasserstoff aufgewendet werden muss, entsprechend verringert.

Insbesondere bevorzugt weist die erfindungsgemäße Windenergieanlage einen verschließbaren Ablauf für Wasser aus der Windenergieanlage auf. Auf diese Weise kann das beim Betrieb der Brennstoffzelle(n) entstehende Wasser aus der Windenergieanlage entfernt werden. Die Verschließbarkeit des Ablaufes trägt dazu bei, dass neuerliche Eintreten von Frischluft und damit Sauerstoff in die Windenergieanlage zu verhindern.

Um den Aufenthalt von Menschen in der Windenergieanlage zu ermöglichen, ohne dass durch das Tragen von Atemgeräten erschwerte Bedingungen geschaffen werden, ist die Windenergieanlage gemäß der Erfindung mit verschließbaren Lüftungsöffnungen im Turm und/oder der Gondel ausgestattet. So kann die Anlage schnell belüftet werden, bevor Personen die Anlage betreten.

Um sicherzustellen, dass die Anlage nur dann betreten werden kann, wenn innerhalb der Anlage in ausreichendem Maße Sauerstoff zur Verfügung steht, kann ein mehrstufiges Schließsystem zum Zugang zur Windenergieanlage und eine Verknüpfung des Schließsystems mit wenigstens einem Sensor in der Windenergieanlage vorgesehen sein. Die Tür der Windenergieanlage lässt sich mit dem Schließsystem nur dann entriegeln, wenn der Sensor in der Anlage eine vorgegebene Sauerstoff-Konzentration festgestellt hat.

In einer bevorzugten Ausführungsform der Erfindung umfasst die Windenergieanlage einen Vorratsbehälter mit einer vorgegebenen Kapazität für ein Gas. In diesem Vorratsbehälter kann während des normalen Betriebs der Windenergieanlage ein inertes Gas gesammelt werden. Dieses steht dann bereit, um wenigstens einen Teil der Windenergieanlage bei Bedarf sogleich mit diesem Gas fluten zu können. Selbst wenn also noch nicht aller Sauerstoff in der Windenergieanlage verbraucht ist, kann während des Betriebs der Windenergieanlage bei Bedarf das (Stickstoff-) Gas sofort in die Anlage befördert werden, um z. B. in einem besonders brandgefährdeten Teil der Anlage sogleich eine Stickstoff-Atmosphäre zu schaffen und damit den Ausbruch eines Brandes sicher zu verhindern.

In einer insbesondere bevorzugten Weiterbildung der Erfindung ist der Turmquerschnitt der Windenergieanlage mit wenigstens einem Boden mit einer verschließbaren Durchgangsöffnung vollständig durchsetzt. Dadurch kann ein durch den Boden abgetrennter Teil der Windenergieanlage bereits eine inerte Atmosphäre aufweisen, während in dem anderen Teil der Windenergieanlage noch eine Sauerstoff enthaltende Atmosphäre vorhanden ist. Im Fall eines Brandes kann dieser Boden auch die Ausbreitung von Ruß verhindern und somit den Schaden in der Anlage begrenzen. Dabei kann die Durchgangsöffnung automatisch verschließbar sein, damit z. B. im Fall einer akuten Brandgefahr der brandgefährdete Teil der Windenergieanlage abgetrennt und mit (Stickstoff-) Gas geflutet werden kann.

Durch einen oder mehrere Sensoren zur Erfassung physikalischer Größen wie Strom, Temperatur, Isolationswiderstand bzw. Leitfähigkeit, etc. können bereits frühzeitig Betriebszustände einer Windenergieanlage erkannt werden, bei denen eine erhöhte Brandgefahr besteht. Dadurch kann z. B. der betroffene Teil der Windenergieanlage durch das Schließen der Durchgangsöffnungen vom Rest der Anlage abgetrennt und vorsorglich mit Stickstoff geflutet werden. Dadurch kann der Ausbruch eines Brandes verhindert werden. Selbst, wenn doch ein Brand ausbricht, wird durch die räumliche Abtrennung der Schaden, z. B. durch Verrußung begrenzt.

Um die Ausfallzeit der Windenergieanlage nach einer Störung möglichst kurz zu halten, kann in Folge vorbestimmter Störungen eine automatische Belüftung der Windenergieanlage erfolgen. Wenn sich also aus der Art der Störung bereits ergibt, dass Servicetechniker die Anlage betreten müssen, kann die Zeit, die diese Servicetechniker für die Anfahrt benötigen, bereits zum Belüften der Anlage verwendet werden, so dass beim Eintreffen der Servicetechniker keine Wartezeit mehr für das Belüften verloren geht. Daher können die Arbeiten an der Anlage dann sogleich aufgenommen werden.

Weiterhin kann in einer besonders bevorzugten Ausführungsform des Verfahrens das Schließsystem den Zugang zur Anlage nur dann ermöglichen, wenn eine ausreichende Sauerstoffkonzentration innerhalb der Anlage festgestellt wird. Auch ist die Ausbildung einer Anzeigeneinrichtung zur Anzeige der Stickstoff/Sauerstoff Konzentration in der Windenergieanlage vorteilhaft. Diese Anzeigeeinrichtung sollte deutlich sichtbar am Windenergieanlageneingang angebracht sein.

Weitere vorteilhafte Ausführungsformen der Erfindung sind in den Unteransprüchen angegeben.

Nachfolgend wird eine Ausführungsform der Erfindung anhand der Figuren näherer erläutert. Dabei zeigen:
- Fig. 1: eine vereinfachte Darstellung einer erfindungsgemäßen Windenergieanlage;
- Fig. 2: eine vereinfachte Darstellung des Verfahrens beim Öffnen des Zugangs zur Windenergieanlage; und
- Fig. 3: eine vereinfachte Darstellung des Verfahrens beim Schließen der Windenergieanlage.

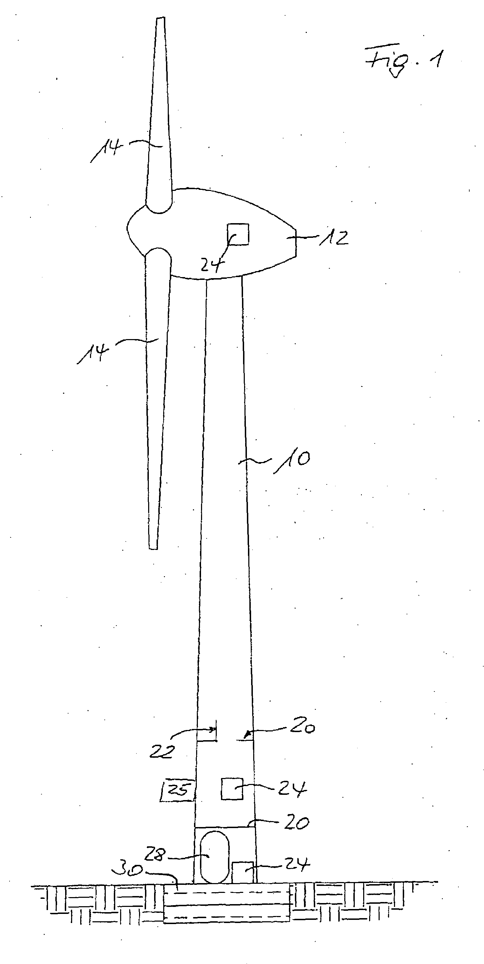

In Figur 1 bezeichnet mit Bezugszeichen 10 den Turm einer Windenergieanlage, mit 12 ist die Gondel bezeichnet, an welcher Rotorblätter 14 dargestellt sind. Der Turm 10 ist auf einem Fundament 30 angeordnet und durch Zwischenböden 20 in mehrere Abschnitte aufgeteilt. Dabei können diese Zwischenböden 20 Klappen 22 aufweisen, mittels denen Durchgangsöffnungen verschlossen werden können. Auf diese Weise kann der Turm 10 in mehrere Abschnitte unterteilt werden.

Innerhalb des Turmes 10 und der Gondel 12 sind Vorrichtungen zum Erzeugen einer inerten Atmosphäre 24 vorgesehen. Diese Vorrichtungen 24 umfassen in einer bevorzugten Ausführungsform Brennstoffzellen, um der Luft innerhalb der Windenergieanlage Sauerstoff zu entziehen. Wird diesen Brennstoffzellen 24 Wasserstoff zugeführt, erzeugen diese elektrische Energie, solange in den entsprechenden Abschnitten des Turmes 10 Sauerstoff vorhanden ist.

Da der Wasserstoff bevorzugt durch Elektrolyse gewonnen wird, kann die von den Brennstoffzellen 24 erzeugte elektrische Energie wiederum für die Elektrolyse verwendet werden. Für die Elektrolyse kann dabei einerseits das Wasser verwendet werden, das in Folge der Luftfeuchtigkeit innerhalb des Turmes 10 an der Turmwand kondensiert und gesammelt wird. Andererseits kann insbesondere bei Offshore-Standorten eine beliebige Menge Wasserstoffgas aus dem Wasser des umgebenden Meeres gewonnen werden. Das während des Betriebs der Brennstoffzelle 24 entstehendes Wasser kann gesammelt und gezielt aus dem Turm herausgeleitet werden.

Wenn den Brennstoffzellen 24 nur das Wasserstoffgas zugeführt wird, wird durch den Betrieb dieser Brennstoffzelle 24 der Sauerstoff innerhalb des Abschnittes der Windenergieanlage verbraucht, in welchen die jeweilige Brennstoffzelle 24 angeordnet ist. Das heißt, die Brennstoffzelle 24 wird solange elektrische Energie erzeugen, wie Sauerstoff innerhalb ihres Abschnittes verfügbar ist. Sobald der Sauerstoff aufgebraucht ist, wird die Brennstoffzelle 24 keine elektrische Energie mehr erzeugen. Somit ergibt sich eine besonders einfache Möglichkeit, festzustellen, ob in der Luft innerhalb des Abschnittes der Windenergieanlage mit der Brennstoffzelle 24 noch Sauerstoff vorhanden ist.

Um möglichst sämtlichen in dem Turm befindlichen Sauerstoff auch an die Brennstoffzellen heranzuführen, ist es vorteilhaft, eine Ventilation oder andere Mittel zur Durchmischung der gesamten Luft in der Windenergieanlage vorzusehen, so dass nicht nur in der Luft um die Brennstoffzelle herum der Sauerstoff verbraucht wird, sondern sämtlicher in der gesamten in der Windenergieanlage befindlicher Sauerstoff.

Durch einen Zwischenboden 20 mit einer durch eine Klappe 22 verschließbaren Durchgangsöffnung kann ein Abschnitt z. B. des Turmes 10 der Windenergieanlage abgetrennt werden, so dass die Brennstoffzelle 24 in diesem Abschnitt nur ein verringertes Volumen in diesem abgetrennten Turmabschnitt von dem Sauerstoff befreien muss, um eine inerte Atmosphäre herzustellen. Aufgrund der normalen Zusammensetzung der Umgebungsluft aus etwa 21 % Sauerstoff, 78 % Stickstoff und geringen Anteilen anderer Gase ist die inerte Atmosphäre nach dem Verbrauch von Sauerstoff im Wesentlichen eine Stickstoff-Atmosphäre.

Weiterhin ist in einem Abschnitt des Turmes 10 ein Vorratsbehälter 28 vorgesehen. In dem gleichen Turmabschnitt ist auch eine Brennstoffzelle 24 angeordnet. Durch den Betrieb der Brennstoffzelle 24 entsteht auch in diesem Abschnitt eine Stickstoff-Atmosphäre. Sobald der Sauerstoff verbraucht ist, kann dann dieser Stickstoff in den Vorratsbehälter 28 gepumpt werden. Sodann wird dieser Turmabschnitt erneut mit Umgebungsluft belüftet und der Vorgang wird wiederholt, so dass in den Vorratsbehälter 28 (Gas-Tank) ein Stickstoff-Vorrat gesammelt werden kann.

Natürlich kann an Stelle eines Turmabschnittes auch ein abgetrennter Raum außerhalb des Turmes 10 der Windenergieanlage vorgesehen sein, z. B. in Form eines Containers bzw. eines Nebengebäudes. In diesem Container kann die erste Vorrichtung 24 zum Erzeugen einer inerten Atmosphäre enthalten sein. Auf diese Weise muss keiner der Turmabschnitte wiederholt belüftet werden, so dass die Gefahr einer unbeabsichtigten Belüftung anderer Turmabschnitte vermieden wird. Falls es erforderlich ist, kann über geeignete Leitungen und Pumpen ein bestimmter Teil der Windenergieanlage, wie z. B. ein Abschnitt des Turmes 10 oder die Gondel 12 sehr schnell mit Stickstoff geflutet werden, indem der Stickstoff aus dem Vorratsbehälter 28 dorthin gepumpt wird. Auf diese Weise kann bei Bedarf in bestimmten Bereichen sofort eine Stickstoff-Atmosphäre geschaffen werden, ohne warten zu müssen, bis die Brennstoffzelle 24 den Sauerstoff verbraucht hat.

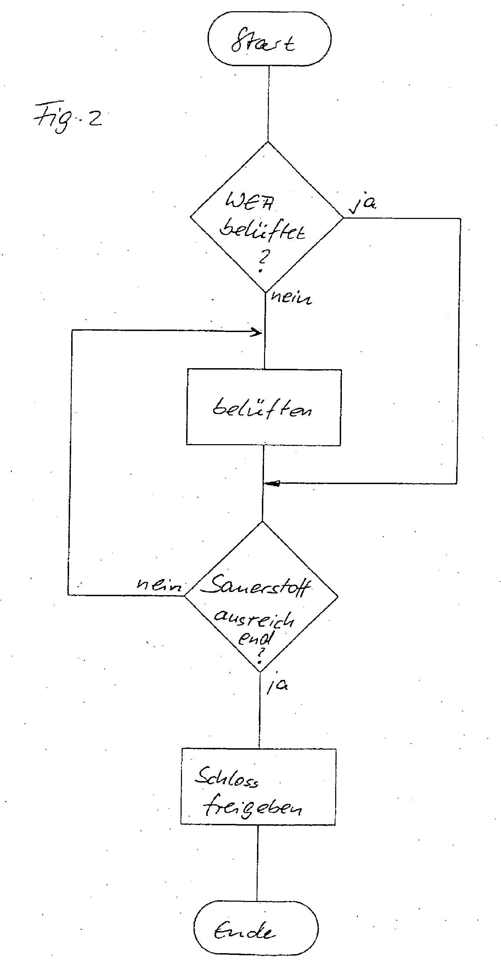

In Figur 2 ist ein Ablaufdiagramm dargestellt, das den Ablauf eines Steuerungsverfahrens beim Öffnen der Windenergieanlage, z. B. vom Servicepersonal den Zutritt zu ermöglichen, darstellt. Ausgangssituation sei der Normalbetrieb der Windenergieanlage, bei dem durch den ausreichend langen Betrieb der Brennstoffzellen (Bezugszeichen 24 in Figur 1) eine inerte Stickstoff-Atmosphäre innerhalb der Windenergieanlage hergestellt oder nachdem ein Teil der Windenergieanlage mit Stickstoff geflutet wurde. Wird die Anlage z. B. aufgrund einer Störung angehalten und ergibt sich bereits aus der Störung, das Servicepersonal die Anlage betreten muss, kann z. B. durch verschließbare Lüftungsklappen in der Tür und der Gondel die stillstehende Anlage bereits vor dem Eintreffen des Servicepersonals belüftet werden. Das Servicepersonal kann also beim Eintreffen die Anlage sofort betreten und mit der Instandsetzung beginnen.

Um jedoch sicher zu verhindern, dass Personen eine Windenergieanlage betreten, in der eine inerte Atmosphäre vorherrscht, kann ein Schließsystem vorgesehen sein, das den Zugang zur Anlage nur dann freigibt, wenn im Inneren der Anlage eine ausreichende Sauerstoffkonzentration festgestellt wird. Daher wird bei der ersten Abfrage in Figur 2 geprüft, ob die Windenergieanlage bereits belüftet ist. Ist dies nicht der Fall, wird die Anlage zunächst belüftet und dann wird festgestellt, ob eine ausreichende Sauerstoffkonzentration innerhalb der Anlage vorhanden ist.

Wird die Windenergieanlage bereits belüftet, wird sofort geprüft, ob eine ausreichende Sauerstoffkonzentration vorhanden ist. Wenn dies nicht der Fall ist, wird die Anlage weiterhin belüftet. Ist eine ausreichende Sauerstoffkonzentration vorhanden, wird das Schloss freigegeben, so dass der Zugang zur Windenergieanlage entriegelt werden kann und der Zugang möglich ist. Vorzugsweise sollte die Sauerstoff/Stickstoff Konzentration nicht nur an einer einzigen Stelle, beispielsweise in der Gondel geprüft werden, sondern an mehreren Stellen zwischen der Gondel und dem Turmfuß. Bei Stickstoff in der Luft muss es in jedem Fall vermieden werden, dass eine Person in den unteren Teil des Turms hinabsteigt und dort aufgrund des Sauerstoffmangels erstickt. Die in der Windenergieanlage üblicherweise angeordneten Ventilatoren (nicht dargestellt) müssen auch dazu verwendet werden, schon bei beginn der Lüftung für Frischluft für eine schnelle und gleich verteilte Luftatmosphäre mit ausreichenden Sauerstoffgehalt (21 %) zu sorgen.

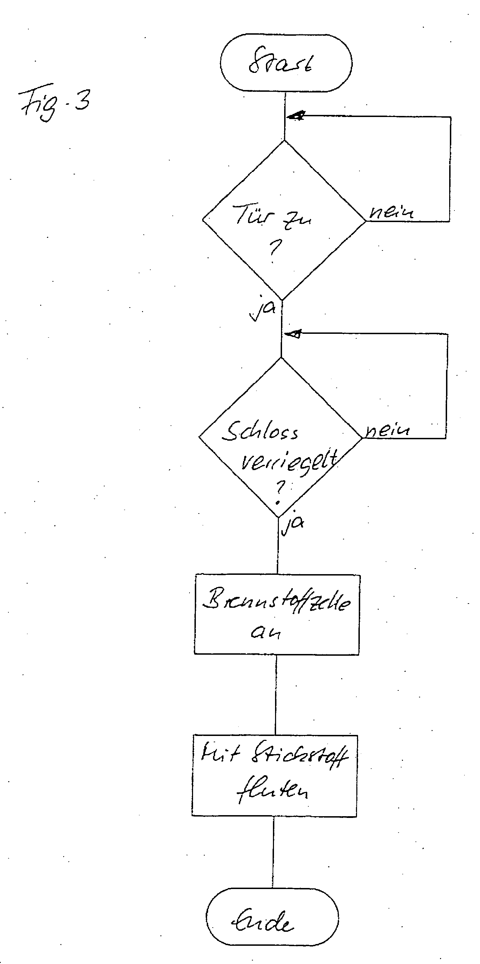

Figur 3 zeigt vereinfacht den Ablauf beim Schließen der Anlage, z. B. nach Abschluss der Arbeiten und der Wiederinbetriebnahme. Zunächst wird geprüft, ob die Zugangsöffnung wie z. B. eine Tür verschlossen ist. Solange die Tür nicht geschlossen ist, ist ein beliebiger Zutritt zu der Anlage möglich und somit verbietet sich bereits deshalb die Schaffung einer inerten Atmosphäre. Weiterhin strömt durch die offene Tür stets Sauerstoff nach, so dass bereits deshalb eine inerte Atmosphäre nicht hergestellt werden kann.

Sobald die Tür verschlossen ist wird geprüft, ob das Schloss betätigt wurde, d. h., ob die Tür verriegelt ist. Dadurch wird sichergestellt, dass die Anlage nicht unbeabsichtigt betreten werden kann bzw. dass die Steuerung anhand des vor Betreten der Anlage erforderlichen Schließvorgangs erkennen kann, dass jemand die Windenergieanlage betreten will und somit eine rechtzeitige Belüftung der Anlage veranlassen kann.

Wenn also die Tür geschlossen und das Schloss verriegelt ist, kann die Steuerung die Brennstoffzellen in Betrieb setzen und somit beginnen, eine inerte Atmosphäre (Stickstoff-Atmosphäre) innerhalb der Windenergieanlage herzustellen.

Da gerade nach der Ausführung von Reparaturarbeiten z. B. infolge von Montagefehlern oder technischen Fehlern an den Ersatzteilen die Gefahr eines Brandes besonders groß ist und da in der Zeit, kurz nachdem das Servicepersonal die Anlage verlassen hat, die Sauerstoffkonzentration innerhalb der Windenergieanlage noch hoch ist, kann ein bestimmter Teil der Windenergieanlage, z. B. ein mit Schaltanlagen ausgerüsteter Teil der Windenergieanlage, aus einem Vorrat mit Stickstoff geflutet werden. Auf diese Weise wird die Brandgefahr sofort erheblich verringert. Das bei der Flutung der gesamten Windenergieanlage mit Stickstoff und damit hergestellten inerten Atmosphäre innerhalb der Windenergieanlage diese von normalem Feuerlöschpersonal nicht betreten werden kann, ist vertretbar, weil ohnehin beim Brand innerhalb einer Windenergieanlage das Löschpersonal kaum in das Innere vordringen kann, ohne selbst Schäden zu nehmen.

Natürlich sind weitere technische Maßnahmen möglich, die verhindern, dass eine Person versehentlich in einer Windenergieanlage eingeschlossen und damit einer Stickstoff-Atmosphäre ausgesetzt wird. Dieses kann z. B. durch Bewegungsmelder wie Infrarotsensoren verwirklicht werden. Eine zusätzliche oder alternative Maßnahme kann eine ausdrückliche Anmeldung und Abmeldung jeder Person sein, welche die Windenergieanlage betritt und wieder verlässt. Außerdem kommt auch eine zeitverzögerte Einschaltung der Brennstoffzellen oder der Pumpen in Betracht, mit denen ein bestimmter Abschnitt der Windenergieanlage mit Stickstoff geflutet wird, so dass auch nach einem irrtümlichen Einschließen einer Person in der Windenergieanlage noch eine gewisse Zeitspanne zur Verfügung steht, um den Irrtum zu bemerken und diese Person rechtzeitig aus der Anlage zu befreien. Schließlich kann der Zugang zur Anlage von innen mit einer Notöffnungsvorrichtung ausgestattet sein, die ein Verlassen der Anlage auch ohne Schlüssel erlaubt.

Die Versorgung des Inneren der Windenergieanlage mit einer inerten Atmosphäre wie einem Stickstoffgas ist nicht nur auf Gondel oder auf das Turm-Innere beschränkt. Da die Gondel auch unmittelbar verbunden ist mit dem Rotor und damit den Rotorblättern der Windenergieanlage können auch die Rotorblätter im Innern mit einer entsprechenden Stickstoffatmosphäre versorgt werden, um auch den Ausbruch eines Brandes in den Rotorblättern zu verhindern.

## Patentansprüche

1. Windenergieanlage, mit einem Turm und einer an der Spitze des Turmes angeordneten Gondel,
**gekennzeichnet durch** wenigstens eine Vorrichtung zum Erzeugen einer inerten Atmosphäre (24) im Turm und/oder in der Gondel oder in anderen Teilen der Windenergieanlage sowie verschließbare Lüftungsöffnungen im Turm (10) und/oder in der Gondel (12) der Windenergieanlage , um die Anlage belüften zu können, bevor Personen die Anlage betreten, und einen Bewegungsmelder, um zu verhindern, dass eine Person versehentlich in einer Windenergieanlage eingeschlossen und damit der inerten Atmosphäre ausgesetzt wird.

2. Windenergieanlage nach Anspruch 1,
**gekennzeichnet durch** wenigstens jeweils eine Vorrichtung zum Erzeugen einer inerten Atmosphäre (24) im Turm (10) und/oder in der Gondel (12) und/oder einem Nebengebäude der Windenergieanlage und/oder einem anderen Raum der Windenergieanlage z. B. dem Inneren eines Rotorblattes.

3. Windenergieanlage nach einem der vorstehenden Ansprüche,
**dadurch gekennzeichnet, dass** die Vorrichtungen zum Erzeugen einer inerten Atmosphäre (24) eine Brennstoffzellen-Einrichtung aufweisen und wenigstens eine Vorrichtung (24) zur Zuführung von Wasserstoff (25) zu den Brennstoffzellen (24) vorgesehen ist.

4. Windenergieanlage nach Anspruch 3,
**gekennzeichnet durch** eine elektrische Verbindung zwischen den Brennstoffzellen (24) und der Vorrichtung zum Erzeugen von Wasserstoff (25).

5. Windenergieanlage nach einem der vorstehenden Ansprüche,
**gekennzeichnet durch** einen verschließbaren Ablauf für Wasser aus der Windenergieanlage und/oder dem Nebengebäude.

6. Windenergieanlage nach einem der vorstehenden Ansprüche,
**gekennzeichnet durch** ein mehrstufiges Schließsystem im Zugang zur Windenergieanlage und/oder dem Nebengebäude und eine Verknüpfung des Schließsystems mit wenigstens einem Sensor innerhalb der Windenergieanlage bzw. dem Nebengebäude.

7. Windenergieanlage nach einem der vorstehenden Ansprüche,
**gekennzeichnet durch** einen Vorratsbehälter (28) vorgegebener Kapazität für ein Gas z. B. Stickstoff.

8. Windenergieanlage nach Anspruch 7,
**gekennzeichnet durch** eine dem Vorratsbehälter (28) zugeordnete Vorrichtung zum Erzeugen einer inerten Atmosphäre (24), wobei der Vorrichtung (24) ein vorgegebenes Raumvolumen zugeordnet ist, und mit einer Verbindung zwischen dem Raumvolumen und dem Vorratsbehälter (28), **durch** welche das inerte Gas des Raumvolumens in den Vorratsbehälter (28) transportiert wird.

9. Windenergieanlage nach einem der vorstehenden Ansprüche,
**gekennzeichnet durch** wenigstens einen den Turmquerschnitt durchsetzenden Boden (20) mit einer verschließbaren Durchgangsöffnung.

10. Windenergieanlage nach einem der vorstehenden Ansprüche,
**gekennzeichnet durch** ein abhängig von einem Freigabesignal betätigbares Schließsystem.

11. Windenergieanlage nach einem der vorstehenden Ansprüche,
**gekennzeichnet durch** wenigstens einen Sensor zur Erfassung physikalischer Größen z. B. Temperatur, Sauerstoffgehalt in der Luft, Druck usw.

## Claims

1. Wind power installation, having a tower and a nacelle arranged at the top of the tower,
**characterised by** at least one apparatus for producing an inert atmosphere (24) in the tower and/or in the nacelle or in other parts of the wind power installation, and by closable ventilation openings in the tower (10) and/or in the nacelle (12) of the wind power installation in order to be able to ventilate the installation before people enter the installation, and by a motion sensor in order to prevent a person from being inadvertently locked inside a wind power installation and thus being exposed to the inert atmosphere.

2. Wind power installation according to claim 1,
**characterised by** at least one respective apparatus for producing an inert atmosphere (24) in the tower (10) and/or in the nacelle (12) and/or an annex building of the wind power installation and/or another space of the wind power installation, for example the interior of a rotor blade.

3. Wind power installation according to either of the preceding claims,
**characterised in that** the apparatuses for producing an inert atmosphere (24) have a fuel cell device, and at least one apparatus (24) for feeding hydrogen (25) to the fuel cells (24) is provided.

4. Wind power installation according to claim 3,
**characterised by** an electrical connection between the fuel cells (24) and the apparatus for producing hydrogen (25).

5. Wind power installation according to any one of the preceding claims,
**characterised by** a closable drain for water from the wind power installation and/or the annex building.

6. Wind power installation according to any one of the preceding claims,
**characterised by** a multi-stage lock system in the access to the wind power installation and/or the annex building and a linking of the lock system with at least one sensor inside the wind power installation and/or, as the case may be, the annex building.

7. Wind power installation according to any one of the preceding claims,
**characterised by** a storage container (26) of predefined, capacity for a gas, for example nitrogen.

8. Wind power installation according to claim 7,
**characterised by** an apparatus for producing an inert atmosphere (24) associated with the storage container (28), wherein there is associated with the apparatus (24) a predefined space volume, and having a connection between the space volume and the storage container (28), through which connection the inert gas of the space volume is transported into the storage container (28).

9. Wind power installation according to any one of the preceding claims,
**characterised by** at least one floor (20) which passes through the cross-section of the tower and has a closable passage opening.

10. Wind power installation according to any one of the preceding claims,
**characterised by** a lock system which is actuable in dependence on a release signal.

11. Wind power installation according to any one of the preceding claims,
**characterised by** at least one sensor for detecting physical quantities, for example temperature, oxygen content in the air, pressure etc.

## Revendications

1. Éolienne de production d'énergie, comprenant un mât et une nacelle aménagée à la pointe du mât,
**caractérisée par** au moins un dispositif pour générer une atmosphère inerte (24) dans le mât et/ou dans la nacelle ou dans d'autres parties de l'éolienne, ainsi que des ouvertures d'aération susceptibles d'être obturées dans le mât (10) et/ou dans la nacelle (12) de l'éolienne, afin de pouvoir aérer l'installation avant que des personnes ne pénètrent dans l'installation, et un détecteur de déplacement, pour empêcher qu'une personne soit enfermée par mégarde dans une éolienne de production d'énergie et soit ainsi exposée à l'atmosphère inerte.

2. Éolienne de production d'énergie selon la revendication 1,
**caractérisée par** au moins un dispositif respectif pour générer une atmosphère inerte (24) dans le mât (10) et/ou dans la nacelle (12) et/ou dans une construction annexe de l'éolienne et/ou dans un autre emplacement de l'éolienne, par exemple l'intérieur d'une pale de rotor.

3. Éolienne de production d'énergie selon l'une des revendications précédentes,
**caractérisée en ce que** les dispositifs pour générer une atmosphère inerte (24) comprennent un système à piles à combustible, et il est prévu au moins un dispositif (24) pour acheminer de l'hydrogène (25) aux piles à combustible (24).

4. Éolienne de production d'énergie selon la revendication 3,
**caractérisée par** une connexion électrique entre les piles à combustible (24) et le dispositif pour générer de l'hydrogène (25).

5. Éolienne de production d'énergie selon l'une des revendications précédentes,
**caractérisée par** une évacuation susceptible d'être obturée pour l'eau provenant de l'éolienne et/ou de la construction annexe.

6. Éolienne de production d'énergie selon l'une des revendications précédentes,
**caractérisée par** un système de fermeture à plusieurs niveaux dans l'accès à l'éolienne et/ou à la construction annexe et par un chaînage du système de fermeture avec au moins un capteur à l'intérieur de l'éolienne ou de la construction annexe.

7. Éolienne de production d'énergie selon l'une des revendications précédentes,
**caractérisée par** un réservoir de stockage (28) ayant une capacité prédéterminée pour un gaz, par exemple de l'azote.

8. Éolienne de production d'énergie selon la revendication 7,
**caractérisée par** un dispositif (24) affecté au réservoir de stockage (28) pour générer une atmosphère inerte, un volume local prédéfini étant affecté au dispositif (24), et par une liaison entre le volume local et le réservoir de stockage (28), par laquelle le gaz inerte du volume local est transporté dans le réservoir de stockage (28).

9. Éolienne de production d'énergie selon l'une des revendications précédentes,
**caractérisée par** au moins un fond (20) s'étendant sur la section transversale du mât, avec une ouverture de passage susceptible d'être obturée.

10. Éolienne de production d'énergie selon l'une des revendications précédentes,
**caractérisée par** un système de fermeture actionnable en fonction d'un signal de libération.

11. Éolienne de production d'énergie selon l'une des revendications précédentes,
**caractérisée par** au moins un capteur destiné à enregistrer des grandeurs physiques, par exemple la température, la teneur en d'oxygène dans l'air, la pression, etc.
